(19) Europäisches Patentamt
European Patent Office
Office européen des brevets

(11) **EP 3 762 624 B1**

(12) **EUROPÄISCHE PATENTSCHRIFT**

(45) Veröffentlichungstag und Bekanntmachung des Hinweises auf die Patenterteilung:
**04.01.2023 Patentblatt 2023/01**

(21) Anmeldenummer: **19809762.8**

(22) Anmeldetag: **22.11.2019**

(51) Internationale Patentklassifikation (IPC):
**F16C 17/10** *(2006.01)* **F01D 25/16** *(2006.01)*
**F16C 27/02** *(2006.01)*

(52) Gemeinsame Patentklassifikation (CPC):
**F16C 17/105; F01D 25/166; F01D 25/186;**
**F16C 17/10; F16C 33/1045;** F05D 2220/40;
F16C 3/02; F16C 17/18; F16C 33/106;
F16C 33/1065; F16C 2360/24

(86) Internationale Anmeldenummer:
**PCT/EP2019/082254**

(87) Internationale Veröffentlichungsnummer:
**WO 2020/114804 (11.06.2020 Gazette 2020/24)**

(54) **ABGASTURBOLADER MIT EINEM HYDRODYNAMISCHEN GLEITLAGER ODER LAGERANORDNUNG MIT EINEM HYDRODYNAMISCHEN GLEITLAGER**

TURBOCHARGER WITH A HYDRODYNAMIC SLIDE BEARING, OR BEARING ARRANGEMENT WITH A HYDRODYNAMIC SLIDE BEARING

TURBOCOMPRESSEUR À GAZ D'ÉCHAPPEMENT DOTÉ D'UN PALIER LISSE HYDRODYNAMIQUE OU ARRANGEMENT DE PALIER DOTÉ D'UN PALIER LISSE HYDRODYNAMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2018 DE 102018130709**

(43) Veröffentlichungstag der Anmeldung:
**13.01.2021 Patentblatt 2021/02**

(60) Teilanmeldung:
**22190386.7**

(73) Patentinhaber:
• **BMTS Technology GmbH & Co. KG**
**70376 Stuttgart (DE)**
• **Berger, Martin**
**75038 Oberderdingen (DE)**

(72) Erfinder:
• **KLEINSCHMIDT, Rüdiger**
**74354 Besigheim (DE)**

• **STETTER, Frieder**
**70597 Stuttgart (DE)**
• **KUHNE, Oliver**
**70374 Stuttgart (DE)**
• **SCHMITT, Steffen**
**71254 Ditzingen (DE)**
• **BERGER, Martin**
**75038 Oberderdingen-Flehingen (DE)**

(74) Vertreter: **Herrmann, Jochen**
**Patentanwalt**
**European Patent Attorney**
**Königstrasse 30**
**70173 Stuttgart (DE)**

(56) Entgegenhaltungen:
EP-B1- 1 972 759    WO-A1-2016/146189
US-A1- 2017 159 708

EP 3 762 624 B1

## Beschreibung

Die Erfindung betrifft einen Abgasturbolader mit einem hydrodynamischen Gleitlager oder eine Lageranordnung mit einem hydrodynamischen Gleitlager, mit einem Rotor, einem dem Rotor zugeordneten Gegen-Lagerteil und einem Lagergehäuse oder Gehäuseteil, wobei sich eine Rotor-Lagerfläche des Rotors und eine Gegenfläche des Gegen-Lagerteils gegenüberstehen, um ein hydrodynamisches Gleitlager zu bilden, wobei die Rotor-Lagerfläche und/oder die Gegenfläche bei einem Schnitt längs und durch die Rotationsachse (R) in Schnittansicht eine durchgehende Lagerkontur bildet/bilden, die wenigstens zwei ineinander übergehende Konturabschnitte bilden, um hydrodynamische Tragfähigkeiten sowohl in radialer als auch in axialer Richtung zu erzeugen, und wobei das Gegen-Lagerteil in ein Lagergehäuse oder ein Gehäuseteil eingebaut ist.

Rotierende Maschinenelemente, wie z.B. Wellen, Laufrollen, Zahn- oder Pumpenräder benötigen eine Führung in radialer und axialer Richtung, um Kräfte und Drehmomente übertragen zu können. Diese Aufgabe kann von hydrodynamisch wirkenden Gleitlagern übernommen werden. Die Funktion dieses Lagertyps basiert auf dem physikalischen Prinzip der hydrodynamischen Druckerzeugung. Zwischen dem Rotor und dem Stator (Gegen-Lagerteil) ist bei hydrodynamischen Gleitlagern ein geeigneter Schmierstoff gehalten. Bei einer Drehbewegung des Rotors relativ zum Stator entstehen im Schmierstoff Scherkräfte, die diesen dann mit einer bestimmten Geschwindigkeit durch das Lager transportieren. Bei einem konvergierenden Lagerspalt ergibt sich hieraus ein hydrodynamischer Druckanstieg. Bei divergierendem Spaltverlauf - im Anschluss an den konvergierenden Lagerspalt, entsteht ein Druckabfall. Ist die Relativgeschwindigkeit zwischen Rotor und Stator ausreichend hoch, baut sich durch den hydrodynamischen Druck eine ausreichend dicke Schmierstoffschicht auf, welche die beiden Gleitpartner voneinander trennt. Die Reibung findet in diesem Betriebszustand in der Schmierstoffschicht statt (Flüssigkeitsreibung). Die so erzeugten hydrodynamischen Drücke halten in Verbindung mit der eingesetzten Fläche den äußeren Kräften das Gleichgewicht und beschreiben die Tragfähigkeit des Gleitlagers. Zur Erzeugung des hydrodynamischen Drucks wird keine zusätzliche Energie in Form von Druckarbeit bzw. ein Schmierstoffvolumen, welches mit einem bestimmten Druck über Nuten oder Taschen zugeführt wird, benötigt. Die Tragfähigkeit ergibt sich aus den Betriebsgrößen. Die Grundlagen zur nummerischen Berechnung des hydrodynamischen Drucks sind in der DIN 31652 Teil 1 (DIN Taschenbuch 198; Gleitlager 2; Beuth Verlag GmbH; Berlin, Köln 1991) dargestellt.

Zum Stand der Technik gehören zwei grundsätzliche Lagertypen:

1. Hydrodynamische Radialgleitlager
Hydrodynamische Radialgleitlager werden häufig in Form von zylindrischen Buchsen als segmentierte Variante oder als Kippsegmentlager ausgeführt. Siehe hierzu (DIN 31652 Teil 2 und VDI-Richtlinien 2204). Die hydrodynamisch wirksamen Elemente (z.B. Segmente) des Gleitlagers sind zylindrisch und damit parallel zur Rotationsachse angeordnet. Der konvergierende Spaltverlauf ergibt sich aus der exzentrischen Lage vom Rotor zum Stator.

2. Hydrodynamische Axialgleitlager
Hydrodynamische Axialgleitlager werden in Form einer Anlaufscheibe mit diversen Nuten bzw. Oberflächenmodifikationen in Form von Staurändern, Keilflächen oder Spiralrillen ausgebildet. Sie können auch als so genanntes Kippsegment-Lager gestaltet sein (siehe hierzu DIN 31653 Teil 1 bis 3; DIN 31654 Teil 1 bis 3). Die Anordnung des Axialgleitlagers erfolgt dabei orthogonal zur Rotationsachse, mit einer in der Regel rotierenden Spurscheibe als Gegenlaufpartner. Der für die hydrodynamische Druckerzeugung benötigte konvergierende Spaltverlauf ergibt sich aus der Gestaltung der Oberflächenstrukturen (Taschen, Rampen, etc.), durch die Neigung der kippbeweglichen Segmente oder einem Winkelversatz zwischen Lager zur Spurscheibe.

Wenn bei einer technischen Lösung sowohl radiale als auch axiale Lasten entstehen, so müssen beide vorgenannten Lagertypen zum Einsatz kommen. Die Axiallasten werden dann über ein Axialgleitlager und die Radiallasten über das Radialgleitlager abgetragen. Die beiden Lagertypen sind dann jeweils getrennt voneinander zu berechnen und auszulegen, wodurch sowohl bei der Konstruktion als auch bei der Produktion entsprechend hohe Kosten entstehen.

Aus der WO 2016/146189 A1 ist ein Abgasturbolader mit einem hydrodynamischen Gleitlager bekannt.

Die EP 1 972 759 B1 betrifft eine Lageranordnung für einen Turbolader.

Aus der DE 10 2008 059 598 A1 ist ein Abgasturbolader bekannt. Dieser weist eine Welle auf, die an ihren Enden ein Turbinenrad bzw. ein Verdichterrad trägt. Die Welle ist mittels zweier hydrodynamischer Gleitlager in einem Gehäuse gelagert. Diese sind in Form von Kegellagern ausgeführt.

Ein weiterer Abgasturbolader ist in der WO 2014/105377 A1 und der EP 1 972 759 B1 beschrieben. Hochdrehende Läufer, die in Lagern, wie in der EP 1 972 759 B1 offenbart, gelagert sind, sind in der Regel durch eine relativ geringe Tragfähigkeit, insbesondere in radialer Richtung, gekennzeichnet. Durch die Art und Weise wie der hydrodynamische Tragfilm in solchen Lagern erzeugt wird, sind relativ steife Dämpfungseigenschaften der Lagerung erforderlich, die wiederum eine relativ lange Bauweise des Radiallagers bedingen, um die aus den radialen Beschleunigungen resultierenden radialen Lasten abtragen zu können.

In der DE 20 2016 105 071 U1 ist ein Abgasturbolader beschrieben, der in einem Lagergehäuse einen Rotor trägt. Der Rotor weist dabei eine Rotorwelle auf, die innerhalb eines Gegen-Lagers drehbar gehalten ist. Zwischen dem Rotor und dem Gegen-Lager sind an gegenüberliegenden Seiten des Gegen-Lagers hydrodynamische Gleitlager vorgesehen. Zu diesem Zweck bilden der Rotor als auch das Gegen-Lager Lagerkonturen. Die Lagerkonturen sind dabei aus Konturabschnitten zusammengesetzt. Bei einem Schnitt längs und durch die Rotationsachse bilden die Lagerkonturen in Schnittansicht durchgehende Geometrien. Die durchgehenden Lagerkonturen sind dabei geometrisch so ausgebildet, dass sie in Schnittansicht und längs der Rotationsachse stetig differenzierbar sind. Auf diese Weise ergeben sich hoch-leistungsfähige hydrodynamische Gleitlager, die dazu geeignet sind sowohl axiale als auch radiale Lasten auf kleinstem Raum abzutragen. Hierdurch entstehen dann, aufgrund der kompakten Bauweise, allerdings hohe Lagerkräfte, die zuverlässig abgetragen werden müssen.

Bei dem aus der DE 20 2016 105 071 U1 bekannten Turbolader ist im Bereich des Verdichterrads zur Verringerung des Teileaufwands eine Dichtbuchse verwendet. Diese ist in Form eines Rotorteils ausgebildet, welches auf die Rotorwelle aufgeschoben ist. Dieses Rotorteil bildet beim hydrodynamischen Gleitlager die Lagerkontur des Rotors. Gleichzeitig besitzt das Rotorteil eine Dichtungsaufnahme, beispielsweise in Form einer oder mehrerer Kolbenringnuten, die zum Beispiel einen Kolbenring aufnehmen und damit den Innenraum des Lagergehäuses gegenüber dem Verdichtergehäuse des Abgasturboladers abdichten kann. Das Rotorteil ist passgenau auf die Rotorwelle aufgeschoben, um ein möglichst geringes Radialspiel zu bewirken. DE 20 2016 105 071 U1 beschreibt einen Turbolader und eine Lageranordnung gemäß dem Oberbegriff des Anspruchs 1.

Es ist Aufgabe der Erfindung, einen effizienten Abgasturbolader gemäß Anspruch 1 mit einer kompakt bauenden und leistungsfähigen Lageranordnung mit einem hydrodynamischen Gleitlager bereitzustellen.

Es ist auch Aufgabe der Erfindung, eine solche Lageranordnung gemäß Anspruch 1 zur Verfügung zu stellen.

Diese Aufgaben werden gemäß der Erfindung dadurch gelöst, dass zwischen einer Außenkontur des Gegen-Lagerteils und dem Lagergehäuse oder dem Gehäuseteil ein umlaufender Spaltbereich zur Bildung eines Quetschölfilms gebildet ist, wobei der Spaltbereich mit einem Schmiermittel-Führungskanal in räumlicher Verbindung steht, und dass sich der Spaltbereich und die durchgehende Lagerkontur des Rotors und/oder des Gegen Lagerteils in Richtung der Rotationsachse zumindest bereichsweise überdecken.

In dem Spaltbereich kann ein Quetschölfilm erzeugt werden. Dies ist möglich, da der Spaltbereich an eine Schmiermittel-Versorgung, mit beispielsweise einer Druckpumpe, angeschlossen ist. Auf diese Weise wird, durch Verdrängen des Schmierstoffs, ein Druck und somit der tragfähige Quetschölfilm im Spaltbereich erzeugt.

Die im Rahmen der Erfindung eingesetzten Lagertypen mit durchgehender und stetig differenzierbarer Lagerkontur, die verschiedene Konturabschnitte aufweisen, zeichnen sich bereits durch eine besonders ruhig laufende und geräuscharme Betriebsweise aus. Daher kann der Spaltbereich so dimensioniert werden, dass eine relativ weiche Dämpfungswirkung des Quetschölfilms entsteht. Hierdurch und durch die direkte Zuordnung des Spaltbereichs zur durchgehenden Lagerkontur ergibt sich eine Lagergestaltung mit einer weichen Dämpfungscharakteristik im Bereich des Quetschölfilms. Dies führt letztendlich auch dazu, dass mit einer weicheren Dämpfung eine geringere Tragfähigkeit des hydrodynamischen Lagers erforderlich wird, was zu einer weiteren Reduzierung der Baugröße des hydrodynamischen Gleitlagers, und damit dessen Reibleistung führt. Schließlich führt diese Lagerauslegung auch zu einer verbesserten Kraftabtragung

Bei der Auslegung des Quetschölfilms mit einer weichen Dämpfungs-Charakteristik zur Reduktion der Reibleistung ist weiterhin zu beachten, dass eine weiche Dämpfungs-Charakteristik zu einer erhöhten Auslenkung des Rotors führt, was eine Vergrößerung der Konturspalte zwischen Turbinen- bzw. Verdichterrad und dem Turbinen bzw. Verdichterrad-Gehäuse bedingt.

Zu diesem Zweck und der Einstellung der Dämpfungs-Charakteristik kann es im Rahmen der Erfindung vorgesehen sein, dass zwischen dem Gegen-Lagerteil und dem Lagergehäuse oder dem Gehäuseteil im Spaltbereich ein in radialer Richtung verlaufendes, auf den äußeren Durchmesser des Spaltbereichs bezogenes relatives Spiel im Bereich zwischen 5 bis 10 Promille gebildet ist. Insbesondere für die Anwendung in Abgasturboladern für Pkws eignet sich ein relatives Spiel im Bereich zwischen 7 bis 9 Promille, bezogen auf den äußeren Durchmesser des Spaltbereichs. Hierdurch wird ein vorteilhafter Kompromiss zwischen einer möglichst geringen Auslenkung und einer möglichst weichen Dämpfungs-Charakteristik, zur Optimierung des Gesamt-Wirkungsgrads der Lageranordnung und des Turboladers, bestehend aus Verdichter- und Turbinen-Wirkungsgrad und dem Wirkungsgrad der Lagerung erreicht.

Der Spaltbereich weist in der Regel die Form eines Hohlzylinders auf. Grundsätzlich ist auch denkbar, dass der Spaltbereich eine andere Geometrie, insbesondere die eines Hohlkonus, aufweist. In diesem Fall, in dem der Spaltbereich eine andere Geometrie aufweist, ist der in Bezug genommene äußere Durchmesser der mittlere Durchmesser

Gemäß einer denkbaren Erfindungsvariante kann es vorgesehen sein, dass das radiale Spiel zwischen dem Gegen-Lagerteil und dem Lagergehäuse oder dem Gehäuseteil größer ist als das radiale Spiel zwischen dem Rotorteil und dem Gegen-Lagerteil.

Gemäß einer denkbaren Erfindungsvariante ist das radiale Spiel zwischen dem Gegen-Lagerteil und dem Lagergehäuse (oder dem Gehäuseteil) und die axiale Erstreckung des Spaltbereichs definiert durch die Beziehung: Axiale Erstreckung des Spaltbereichs in Millimeter gleich 9 minus C mal radiales Spiel zwischen dem Gegen-Lagerteil und dem Lagergehäuse in Millimeter, wobei C im Bereich zwischen 61 bis 75 liegt. Bevorzugt ist C im Bereich zwischen 66 und 70 gewählt.

Auf diese Weise kann eine relativ weiche Dämpfungscharakteristik im Quetschölfilm erreicht werden. Hierdurch können niedrige radiale Lagerkräfte verwirklicht werden. Dies ermöglicht eine Reduzierung der benötigten axialen Lagerlänge und damit einhergehend, eine Verringerung der Reibleistung, ohne signifikante Verluste beim thermodynamischen Wirkungsgrad der Turbine und des Verdichters hinnehmen zu müssen. Dies ist bei hochdrehenden Anwendungen, beispielsweise modernen Abgasturboladern oberhalb von 200.000 Umdrehungen/min von besonderer Bedeutung.

Die durch eine angepasste Dämpfung niedrigere erforderliche Tragfähigkeit des hydrodynamischen Gleitlagers wird gemäß der Erfindung dadurch verwirklicht, dass die axiale Überdeckung in Richtung der Rotationsachse zwischen dem Gegen-Lagerteil und dem Lagergehäuse oder dem Gehäuseteil im Spaltbereich, zur Bildung eines Quetschölfilms derart bemessen ist, dass das Verhältnis der Erstreckung des Spaltbereiches in Richtung der Rotationsachse zu dem Radialspiel zwischen dem Gegen-Lagerteil und dem Lagergehäuse oder dem Gehäuseteil beträgt:

Axiale Erstreckung des Spaltbereiches in Richtung der Rotationsachse / Radialspiel = 40 bis 80.

Besonders bevorzugt kann dieses Verhältnis im Bereich zwischen 45 bis 70 gewählt sein.

Während des Betriebseinsatzes werden im Bereich des hydrodynamischen Gleitlagers, wie dies bereits oben bei der Diskussion des Standes der Technik erwähnt wurde, hohe Lagerkräfte erzeugt. Die Erfinder haben nun erkannt, dass eine zuverlässige Lastabtragung dieser, insbesondere hohen Radiallasten von dem hydrodynamischen Gleitlager in die Rotorwelle erforderlich ist, um eine zuverlässige Betriebsweise zu garantieren. Zu diesem Zweck wird vorgeschlagen, dass sich der Stützabschnitt, mit dem sich das Rotorteil gegenüber der Rotorwelle abstützt, in Richtung der Rotationsachse mit zumindest einem der Konturabschnitte des Gegen-Lagerteils, vorzugsweise mit dem Lagerbereich, in dem die Radiallasten größtenteils abgestützt werden, überdeckt ist. Auf diese Weise wird eine unmittelbare Kraftableitung in radialer Richtung und auf direktem Weg von diesem Konturabschnitt über den Stützabschnitt in die Rotorwelle erreicht. Das Rotorteil bleibt dabei einfach montierbar, denn es kann beispielweise auf die Rotorwelle aufgeschoben werden, wobei dann der Stützabschnitt dem entsprechenden Lagerbereich des Rotorteils zugeordnet wird. Im montierten Zustand ist das Rotorteil dabei insbesondere kippstabil gehalten, was dazu führt, dass der Schmierstoffspalt im hydrodynamischen Gleitlager während des Betriebseinsatzes, auch bei wechselnden Belastungen, zuverlässig aufrechterhalten bleibt.

Gemäß einer bevorzugten Erfindungsvariante kann es vorgesehen sein, dass das Rotorteil einen Lagerbereich aufweist, der die Konturabschnitte bildet, und dass der Lagerbereich so angeordnet ist, dass wenigstens einer dieser Konturabschnitte in Richtung der Rotationsachse den Stützabschnitt zumindest bereichsweise überdeckt. Dadurch dass das Rotorteil unmittelbar die Konturabschnitte für den Lagerbereich bildet, wird der Teileaufwand deutlich reduziert. Durch die geringe Anzahl der Bauteile des Gleitlagers, in dem sich in radialer Richtung an den Stützabschnitt anschließenden Lagerbereich, wird auch die Summe der Fertigungstoleranzen in diese Richtung minimiert, was zu einer maßhaltigen und einfach reproduzierbar fertigbaren Lager-Anordnung führt, bei der das Lagerspiel im hydrodynamischen Gleitlager präzise eingehalten werden kann.

Gemäß einer bevorzugten Ausgestaltungsvariante der Erfindung kann es vorgesehen sein, dass das radiale Spiel zwischen dem Stützabschnitt der Rotorwelle und dem am Stützabschnitt anliegenden Bereich des Rotorteils kleiner ist, als das radiale Spiel zwischen dem Rotorteil und dem Gegen-Lagerteil, bevorzugt weniger als 80%, besonders bevorzugt weniger als 60% des radialen Spiels zwischen dem Rotorteil und dem Gegen-Lagerteil entspricht.

Es hat sich gezeigt, dass ein Passsitz zwischen dem Stützabschnitt der Rotorwelle und dem Lagerbereich des Rotorteils dann zu einem betriebssicher arbeitenden Gleitlager führt, wenn vorgesehen ist, dass zwischen dem Stützabschnitt der Rotorwelle und dem am Stützabschnitt anliegenden Bereich des Rotorteils, ein Passsitz, mit einem auf den Durchmesser des Stützabschnitts bezogenen relativen radialen Lagerspiel zwischen Rotor und Stator des hydrodynamischen Gleitlagers im Bereich zwischen -6 bis +6 Promille vorgesehen ist. Ein guter Kompromiss zwischen dem Unwucht-Verhalten des Rotors und einer einfachen Montage des Rotorteils ergibt sich dann, wenn vorgesehen ist, dass ein radiales Spiel in diesem Passsitz in der ISO-Grundtoleranzklasse IT3 bis IT8 gebildet ist,

Eine Anordnung, welche gemäß einer oder mehrerer der vorstehend genannten Dimensionierungsvorgaben gestaltet ist, eignet sich insbesondere für die Zwecke zur Anwendung in einem Abgasturbolader für einen Pkw. Insbesondere entstehen bei einer solchen Anordnung nur geringe Unwuchten. Darüber hinaus ist dabei auch stets ein ausreichender Schmierspalt im hydrodynamischen Gleitlager garantiert. Selbst die dabei mögliche minimale Schmierspaltdicke ist in diesem Zusammenhang so dimensioniert, dass bei dem speziellen Lagertyp gemäß der Erfindung ein ausreichender Schmiermittelfluss möglich ist. Dieser Schmiermittelfluss ist dabei dann auch insbesondere derart, dass innerhalb des Schmierstoffspalts des hydrodynamischen Gleitlagers keine solchen Wirbelströmungen im Schmierstoff auftreten, welche zu einer störenden akustischen Beeinträchtigung führen würden. Insbesondere entstehen dann bei einem solchen hydrodynamischen Gleitlager keine selbsterregenden Wirbelströmungen im Schmierstoff.

Zur Verringerung des Teileaufwands kann es vorgesehen sein, dass das Rotorteil ein Basisteil aufweist, das mit zumindest einer Dichtungsaufnahme versehen ist, in die ein umlaufendes Dichtelement eingelegt ist.

Um eine exakte Zuordnung des Rotorteils zu dem Gegen-Lagerteil garantieren zu können, kann es gemäß einer Ausgestaltungsvariante der Erfindung vorgesehen sein, dass das Rotorteil einen Ansatz mit einer Anschlagfläche aufweist, und dass die Anschlagfläche an einer radial verlaufenden Fläche eines Bunds der Rotorwelle flächig anschlägt.

Die vorgeschriebene flächige Anlage ermöglicht es auch eine axiale Spannkraft in das Rotorteil einzubringen, sodass es zwischen einem Verdichterrad und dem Bund vorzugsweise unter Einwirkung einer Schraubverbindung, verspannt, axial gesichert und in Umfangsrichtung unverdrehbar gehalten ist. Durch diese Maßnahme ergibt sich eine einfache Montage mit geringem Teileaufwand.

Wie dies bereits vorstehend angedeutet wurde, eignen sich die oben diskutierten einzelnen Maßnahmen insbesondere in Verbindung mit einem speziellen vorteilhaften Lagertyp nach der Erfindung, wobei die durchgehende und aus den zwei oder mehreren Konturabschnitten bestehende Lagerkontur der Rotor-Lagerfläche und/oder der Gegenfläche bei einem Schnitt längs und durch die Rotationsachse in Schnittansicht stetig differenzierbar ausgebildet ist. Bei diesem Lagertyp lassen sich hydrodynamische Tragfähigkeiten über die Konturabschnitte und vorzugsweise die gesamte Lagerkontur sowohl in axialer als auch in radialer Richtung erzeugen. Die hydrodynamischen Gleitlager können als Mehrflächengleitlager ausgebildet sein. Sie können weiterhin auch mit zwei oder mehreren Schmierkeilen ausgestattet sein.

Mit der durchgehenden und im Querschnitt variierenden Lagerkontur, insbesondere im Bereich des konvergierenden Spalts des hydrodynamischen Gleitlagers, können Druckbereiche erzeugt werden, die sowohl axiale als auch radiale Lasten abtragen. Dadurch entstehen im hydrodynamischen Gleitlager 3-dimensionale hydrodynamische Tragfähigkeiten. Die Erfindung nutzt den physikalischen Effekt, wonach der lokal erzeugte hydrodynamische Druck normal auf eine Fläche wirkt. Daraus ergeben sich lokale Tragfähigkeiten. Da im Rahmen der Erfindung die Oberfläche der Lagerkontur dreidimensional gestaltet werden kann, ergeben sich daraus lokale Kraftkomponenten mit entsprechenden Richtungen. Aus der integralen Summe der einzelnen Kraftkomponenten können die Tragfähigkeitskomponenten des Lagers und damit die dreidimensionale Tragfähigkeit berechnet und für den gewünschten Anwendungsfall ausgelegt werden.

Dabei können die hydrodynamischen Gleitlager, wie oben angedeutet, als Mehrflächengleitlager, bspw. mit zwei oder mehreren Schmierkeilen ausgestattet sein. Durch die Segmentierung der Lagerung im Bereich der Konturabschnitte wird eine Verringerung der Reibung erreicht. Darüber hinaus verbessert sich bei diesem Lager auch die axiale Tragfähigkeit, da zwischen den einzelnen Konturabschnitten ein kontinuierlicher und stetig differenzierbarer Übergang geschaffen wird. Hierdurch wird insgesamt eine höhere Tragfähigkeit bei gleichbleibender Reibleistung erreicht. Die Segmentierung der Lageranordnung führt auch zu einer weiteren Reduzierung der Schallemission.

Gemäß einer möglichen Erfindungsvariante kann es vorgesehen sein, dass zwischen der Rotorwelle und dem Rotorteil in Richtung der Rotationsachse mittelbar oder unmittelbar neben dem Stützabschnitt ein, vorzugsweise ringförmiger Abstandsraum, gebildet ist. Dies führt zu einer eindeutigen Abstützung des Rotorteils am Stützabschnitt. Darüber hinaus wird die Montage aufgrund der geringeren Führungslänge des Rotorteils vereinfacht. Besonders bevorzugt kann es dabei vorgesehen sein, dass der Abstandsraum von einer Durchmesservergrößerung im Rotorteil gebildet ist, die sich an den Lagerbereich des Rotorteils anschließt. Hierdurch wird die Fertigung vereinfacht. Zudem kann dann die Rotorwelle in diesem Bereich unbeeinflusst bleiben, was zu einer höheren Stabilität führt.

Die Erfindung wird im Folgenden anhand eines in den Zeichnungen dargestellten Ausführungsbeispiels näher erläutert. Es zeigen:

Figur 1          einen Abgasturbolader in Schnittdarstellung und

Figuren 2 und 3    vergrößerte Detaildarstellungen, die der Figur 1 entnommen sind.

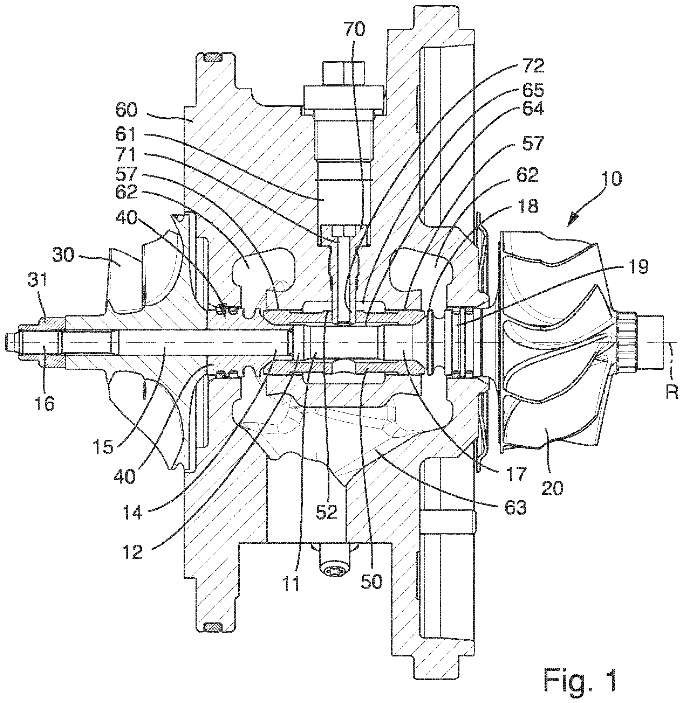

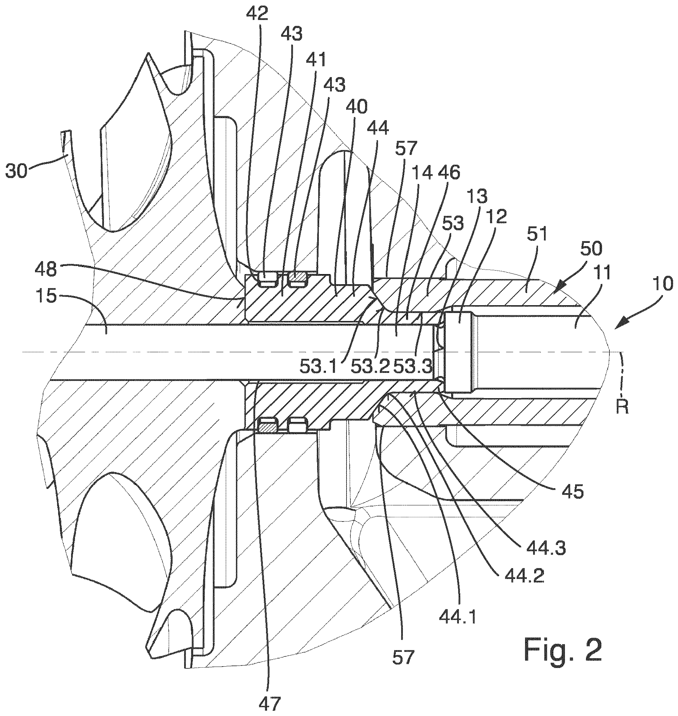

Figur 1 zeigt einen Abgasturbolader in Seitenansicht und im Schnitt. Der Abgasturbolader weist einen Rotor 10 mit einer Rotorwelle 11 auf. Die Rotorwelle 11 besitzt einen Mittenabschnitt, der eine Verjüngung aufweisen kann. An seinem zum Verdichter weisenden Ende weist der Mittenabschnitt einen Anschlag 13 auf. Zwischen dem Anschlag 13 und der Verjüngung des Mittenabschnitts kann demzufolge ein umlaufender Bund 12 ausgebildet sein. Der Anschlag 13 ist in Figur 2 erkennbar. Wie diese Darstellung veranschaulicht, kann der Anschlag 13, vorzugsweise als Wellenschulter mit einer radial ausgerichteten Fläche, ausgeführt sein, die ringförmig umläuft. Im Anschluss an den Bund 12 besitzt die Rotorwelle 11 verdichterseitig einen Stützabschnitt 14. Dieser kann in Form einer bearbeiteten umlaufenden Fläche ausgebildet sein. Der Stützabschnitt 14 geht in einen Wellenabschnitt 15 über, der dann in einem Gewindeabschnitt 16 ausläuft.

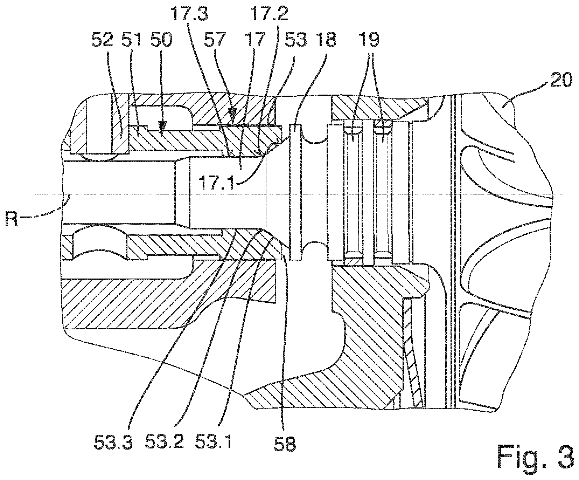

Auf der dem Gewindeabschnitt 16 gegenüberliegenden Seite der Rotorwelle 11 kann vorzugsweise ein Lagerabschnitt 17 vorgesehen sein. Der Lagerabschnitt 17 kann durch Bearbeitung der Rotorwelle 11 von dieser gebildet sein. Wie die Darstellung gemäß Figur 3 erkennen lässt, weist der Lagerabschnitt 17 der Rotorwelle 11 eine umlaufende Lagerkontur auf. Diese Lagerkontur weißt mehrere Konturabschnitte 17.1 bis 17.3 auf und ist vorzugsweise einteilig mit der Rotorwelle 11 ausgebildet. Der Axialkräfte oder Radial- und/oder Axialkräfte abtragende Konturabschnitt 17.1 kann beispielsweise stumpfkegelförmig ausgebildet sein um radiale Kräfte aufzunehmen. Er kann auch konvex oder konkav ausgebildet sein. Der Konturabschnitt 17.3 kann zylinderförmig ausgebildet sein. Die beiden Konturabschnitte 17.1 und 17.3 sind über den Konturabschnitt 17.2 miteinander verbunden. Dabei ist die Zuordnung so getroffen, dass die Konturabschnitte 17.1 bis 17.3 durchgehend ineinander übergehen und somit die durchgehende Lagerkontur bilden. Bei einem Schnitt durch die Rotationsachse R der Rotorwelle 11, wie er in Figur 3 veranschaulicht ist, ist die Lagerkontur längs der Rotationsachse R stetig differenzierbar ausgebildet. Es ist ebenso vorstellbar, dass die Konturabschnitte 17.1 bis 17.3 durch eine mehrfach stetig differenzierbare Funktion gebildet werden, und somit eine krümmungsstetige Lagerkontur formen.

Im Anschluss an den Konturabschnitt 17.1 kann die Rotorwelle 11 einen Abweiser 18 in Form einer Ölschleuderscheibe, beispielsweise in Form einer Durchmesservergrößerung aufweisen. Im vorliegenden Ausführungsbeispiel ist die Durchmesservergrößerung in Form eines umlaufenden Bunds ausgebildet. Der Abweiser 18 kann jedoch auch eine andere geeignete Kontur aufweisen die eine Öl-Leckage durch den Wellendurchtritt im Lagergehäuse wirkungsvoll verhindert oder zumindest reduziert.

Die Rotorwelle 11 kann auch, wie Figur 3 erkennen lässt wenigstens eine Dichtungsaufnahme 19 aufweisen. Im vorliegenden Ausführungsbeispiel sind zwei Dichtungsaufnahme 19, beispielsweise in Form von Kolbenringnuten, verwendet, die zueinander axial beabstandet angeordnet sind. In die Dichtungsaufnahmen 19 sind Kolbenringe eingesetzt. An dem dem Verdichterrad gegenüberliegenden Ende der Rotorwelle 11 ist ein Turbinenrad 20 angeordnet. Das Turbinenrad 20 ist in der Regel stoffschlüssig mit der Rotorwelle 11 verbunden.

Auf der dem Turbinenrad 20 abgewandten Seite besitzt der Rotor 10 einer Rotorteil 40. Dieses Rotorteil 40 ist vergrößert in Figur 2 veranschaulicht. Wie diese Darstellung zeigt, besitzt das Rotorteil 40 ein Basisteil 41. In das Basisteil 41 kann beispielsweise wenigstens eine umlaufende Dichtungsaufnahme 42 in Form einer Kolbenring-Nut aufweisen. Im vorliegenden Ausführungsbeispiel sind zwei umlaufende Dichtungsaufnahmen 42 verwendet. In die Dichtungsaufnahme 42 sind ringförmige Dichtelemente 43 in Form von Kolbenringen eingesetzt.

Das Rotorteil 40 besitzt im Anschluss an das Basisteil 41 einen Lagerabschnitt 44. Der Lagerabschnitt 44 bildet eine umlaufende Lagerkontur, die ähnlich oder baugleich mit der Lagerkontur sein kann, welche die Konturabschnitte 17.1 bis 17.3 aufweist, wobei der Lagerabschnitt 44 Konturabschnitte 44.1 bis 44.3 aufweist, die die Lagerkontur bilden. Der Konturabschnitt 44.1 zur Aufnahme der Axiallasten ist vorzugsweise stumpfkegelförmig ausgebildet, kann jedoch auch konvex oder konkav gewölbt sein. Weiterhin ist wieder ein zylindrischer Konturabschnitt 44.3 zur Aufnahme radialer Lasten verwendet. Die beiden Konturabschnitte 44.1 und 44.3 werden unter Vermittlung des Konturabschnitts 44.2 miteinander verbunden, bzw. werden mittels des Konturabschnitts 44.2 ineinander überführt. Der Konturabschnitt 44.2 kann ähnlich wie der Konturabschnitt 17.2 hohlkehlförmig ausgebildet sein. Mit den Konturabschnitten 44.1 bis 44.3 wird die durchgehende Lagerkontur gebildet. Bei einem Schnitt durch die Rotationsachse R gemäß Figur 2 bildet die Lagerkontur in Schnittansicht eine durchgehende und stetig differenzierbare Kontur. Dies ist in der Zeichnung deutlich erkennbar, wobei die Konturabschnitte 44.1 bis 44.3 ohne Stetigkeitssprünge durchgehend ineinander übergehen. Wie auch bei der turbinenseitigen Lagerkontur 17.1 bis 17.3 ist hier ebenfalls vorstellbar, dass die Konturabschnitte 44.1 bis 44.3 durch eine mehrfach stetig differenzierbare Funktion gebildet werden, und somit eine krümmungsstetige Lagerkontur formen

An seinem dem Bund 12 zugewandten Ende kann das Rotorteil 40 einen Ansatz 45 aufweisen. Dieser ist vorzugsweise von dem Lagerabschnitt 44 gebildet. Die Stirnfläche des Ansatzes 45 ist radial ausgerichtet. Auf diese Weise liegt der Ansatz 45 endseitig flächig an dem Anschlag 13 des Bundes 12 an. Um die flächige Anlage zu garantieren, ist der Ansatz 45 innenseitig umlaufend angefast. Zudem ist im Anschluss an den Bund 12 zu diesem Zweck ein Freistich in die Rotorwelle 11 eingedreht, wie Figur 2 zeigt.

Das Rotorteil 40 liegt an dem den Lagerbereich 46 bildenden Lagerabschnitt 44 an dem Stützabschnitt 14 der Rotorwelle 11 an. Dabei ist zwischen dem Rotorteil 40 und der Rotorwelle 10 ein Passsitz, vorzugsweise in Form einer Übergangspassung, gebildet. Vorzugsweise ist eine Übergangspassung in der ISO-Grundtoleranzklasse IT3 bis IT8 verwirklicht. Die Bohrung, welche in den Lagerbereich 46 eingebracht ist und zur Anlage an dem Stützabschnitt 14 dient, weist im Anschluss an den Lagerbereich 46 eine Durchmesservergrößerung auf, die einen Rücksprung 47 bildet. Mittels des Rücksprungs 47 ergibt sich zwischen dem Rotorteil 40 und dem Außenumfang der Rotorwelle 11 ein ringförmiger Freiraum.

Das Basisteil 41 weist eine ringförmige und radial verlaufende Anlagefläche 48 auf. Diese Anlagefläche 48 ist mithin parallel der Anlagefläche des Lagerabschnitts 44, welche an dem Bund 12 anliegt.

Auf die Rotorwelle 11 wird im Bereich des Wellenabschnitts 15 ein Verdichterrad 30 aufgeschoben. Das Verdichterrad 30 liegt mit einer radial verlaufenden Anlagefläche an der Anlagefläche 48 des Rotorteils 40 an. Zur Fixierung des Rotorteils 40 und des Verdichterrads 30 ist eine Mutter 31 auf den Gewindeabschnitt 16 aufgeschraubt. Die Mutter 31 verspannt mithin das Verdichterrad 30 gegen das Rotorteil 40 und das Rotorteil 40 gegen den Anschlag 13. Auf diese Weise werden sowohl das Verdichterrad 30 als auch das Rotorteil 40 axial auf der Rotorwelle 11 festgelegt und daran in Umfangsrichtung unverdrehbar gehalten

Wie Figur 1 erkennen lässt, besitzt der Abgasturbolader ein Gegen-Lagerteil 50, welches in ein Lagergehäuse 60 des Abgasturboladers eingesetzt ist. Das Gegen-Lagerteil besitzt ein Mittelteil 51. An den Mittelteil 51 schließen sich beidseitig Ansätze 53 an. Die beiden Ansätze 53 weisen jeweils eine umlaufende Lagerkontur auf. Diese umlaufende Lagerkontur ist komplementär zu der Lagerkontur die durch das Rotorteil 14 bzw. den Lagerabschnitt 17 der Rotorwelle 11 gebildet ist ausgeführt. Dementsprechend weisen diese Lagerkonturen Konturabschnitte 53.1 bis 53.3 auf, die wieder umlaufend ausgeführt sein können. Der die Axialkräfte aufnehmende Konturabschnitt 53.1 ist zum Beispiel stumpfkegelförmig und der Konturabschnitt 53.3 zum Beispiel zylindrisch gefertigt. Die beiden Konturabschnitte 53.1 und 53.3 gehen über den Konturabschnitt 53.2 zumindest einmal stetig differenzierbar und durchgehend ineinander über.

Zur Montage der Baugruppe gemäß Figur 1 für einen Abgasturbolader wird zunächst das Gegen-Lagerteil 50 in eine entsprechend hergerichtete Aufnahme des Lagergehäuses 60 eingeführt. Um die in Figur 1 gezeigte vorgegebene Position des Gegen-Lagerteils 50 in dem Lagergehäuse 60 zu fixieren ist ein Fixierelement 70 verwendet. Das Fixierelement 70 weist einen Halteabschnitt 72 auf. Dieser Halteabschnitt 72 greift in eine Fixieraufnahme 52 des Gegen-Lagerteils 50 ein. Zur Montage des Fixierelements 70 kann dieses durch einen Schmiermittel-Führungskanal 61 des Lagergehäuses 60 eingeführt werden. Um das Fixierelement 70 unverlierbar zu halten, kann es in dem Lagergehäuse 60 eingeschraubt, eingepresst oder mit einem Halteelement gesichert werden.

Nachdem das Gegen-Lagerteil 50 in dem Lagergehäuse 60 montiert ist, kann der Rotor 10 eingebaut werden. Zu diesem Zweck wird die Rotorwelle 11 von der turbinenseitigen Lagergehäuseseite her in eine Bohrung des Lagergehäuses 60 eingeschoben. Dabei durchgreift die Rotorwelle 11 das Gegen-Lagerteil 50, wie dies Figur 1 zeigt. Die Einschiebe-Bewegung des Rotors 10 wird mit dem Konturabschnitt 17.1 der Rotorwelle 11 begrenzt, welcher an dem zugeordneten Konturabschnitt 53.1 des Gegen-Lagerteils anliegt (siehe Figur 3). In der montierten Position liegen die Dichtelemente, welche in die umlaufenden Dichtungsaufnahme 19 eingesetzt wurden an einer zugeordneten ringförmigen Dichtfläche des Lagergehäuses 60 an (siehe Figur 3).

Von der gegenüberliegenden Seite kann nun das Rotorteil 40 in das Lagergehäuse 60 eingeschoben werden. Dabei wird das Rotorteil 40 mit seinem Lagerbereich 46 voraus auf die Rotorwelle 11 aufgeschoben. Dies gelingt einfach, da das Rotorteil 40 lediglich im Lagerbereich 46 passgenau auf der Rotorwelle 11 geführt ist. Im Übrigen behindert der Rücksprung 47 die Einschub-Bewegung nicht. In der Montagestellung gemäß Figur 2 schlägt das Rotorteil 40 an dem Bund 12 an. Anschließend wird das Verdichterrad 30 auf die Rotorwelle 11 aufgezogen und die Mutter 31 verschraubt (siehe Beschreibung oben). Im montierten Zustand ist der Rotor 10 mit seinen Konturabschnitten 53.1 bis 53.3 an beiden Ansätzen 53 gegenüberliegend den Konturabschnitten 17.1 bis 17.3 bzw. 44.1 bis 44.3 angeordnet. Dabei ist die Zuordnung so getroffen, dass ein Lagerspiel entsteht, in dem jeweils ein hydrodynamischer Film, zur Erzeugung zweier hydrodynamischer Gleitlager, geführt ist. Das relative radiale und das relative axiale Lagerspiel jedes hydrodynamischen Gleitlagers liegt vorzugsweise im Bereich zwischen 1 bis 5 Promille des Durchmessers des Radialkräfte übertragenen Konturabschnitt 17.3 bzw. 44.3.

Wie Figur 1 zeigt ist zwischen einem, vorzugsweise beiden Ansätzen 53 des Gegen-Lagerteils 50 und dem Lagergehäuse 60 ein umlaufender Spaltbereich 57 geschaffen. Dieser Spaltbereich weist ein in radialer Richtung verlaufendes relatives radiales Spiel (absolutes radiales Spiel / Durchmesser des Gegen-Lagerteils 50 im Spaltbereich 57) im Bereich zwischen 5 bis 10 Promille, besonders bevorzugt im Bereich zwischen 7 bis 9 Promille auf.

Der Spaltbereich 57 ist vorzugsweise so angeordnet, dass wenigstens einer der Konturabschnitte 44.1 bis 44.3 bzw. 17.1 bis 17.3 den Spaltbereich 57 in Richtung der Rotationsachse R überdeckt, besonders bevorzugt ist die Überdeckung zumindest im Bereich der Konturabschnitte 17.3 und 44.3 gegeben, die einen wesentlichen Beitrag für die Tragfähigkeit des hydrodynamischen Gleitlagers in radialer Richtung bieten. Die axiale Überdeckung in Richtung der Rotationsachse R zwischen dem Gegen-Lagerteil 50 und dem Lagergehäuse 60 im Spaltbereich 57 ist erfindungsgemäß so bemessen, dass das Verhältnis der Erstreckung des Spaltbereiches 57 in Richtung der Rotationsachse R zu dem Radialspiel zwischen dem Gegen-Lagerteil 50 und dem Lagergehäuse 60 oder dem Gehäuseteil beträgt:

Axiale Erstreckung des Spaltbereiches 57 in Richtung Rotationsachse R / Radialspiel = 40 bis 80

Besonders bevorzugt beträgt dieses Verhältnis im Bereich zwischen 45 bis 70.

Mit einer oder mehrerer der vorgenannten Dimensionierungsvorgaben wird im Spaltbereich 57 ein Quetschölfilm geschaffen. Dieser Quetschölfilm weist für die erfindungsgemäßen hydrodynamischen Gleitlager eine hohe axiale Tragfähigkeit für die gängigen Abgasturbolader Anwendungen auf. Ein mit geeigneter Dämpfung ausgelegter Quetschölfilm eignet sich in besonderer Weise zur Reduktion der Lagerkräfte, die insbesondere von Unwucht und Lastwechsel-Vorgängen während des Betriebes herrühren. Auf diese Weise wird zum einen ein besonders geräuscharm arbeitender Abgasturbolader, zum anderen aber auch ein reibleistungsverbesserter Abgasturbolader geschaffen.

Die beiden Spaltbereiche 57 stehen in räumlicher Verbindung mit dem Schmiermittel-Führungskanal 61. Unter Druck stehendes Schmiermittel kann über den Schmiermittel-Führungskanal 61 zugeführt werden. Es gelangt durch einen Kanal 71 des Fixierelements 70 in eine Kammer 64. Von der Kammer 64 wird das Schmiermittel in die Spaltbereiche 57 gedrückt. Auf diese Weise entsteht im ringförmig umlaufenden Spaltbereich 57 die Möglichkeit eine anpassbare Dämpfung durch den Quetschölfilm zu verwirklichen. Von derselben Kammer 64 wird das Schmiermittel auch den beiden hydrodynamischen Gleitlagern zugeführt. Entsprechend gelangt damit das Schmiermittel in den Bereich des hydrodynamischen Spaltes, welcher zwischen den Konturabschnitten 44.1 bis 44.3 des Rotors 10 und den zugeordneten Konturabschnitten 53.1 bis 53.3 des Gegen-Lagerteils einerseits und den Konturabschnitten 17.1 bis 17.3 sowie den zugeordneten Konturabschnitten 53.1 bis 53.3 andererseits gebildet ist. Während der Rotation des Rotors 10 wird das Schmiermittel über den hydrodynamischen Spalt der hydrodynamischen Gleitlager zur hydrodynamischen Druckerzeugung geleitet. Im Anschluss an den hydrodynamischen Spalt gelangt das Schmiermittel in einen Schleuderraum 62. In diesen Schleuderraum 62 können beispielsweise auch die Spaltbereiche 57 münden. Das Schmiermittel wird in einem Sammelbereich 63 des Lagergehäuses 60 gesammelt, dem Schmiermittelkreislauf zurückgeführt und wieder dem Schmiermittel-Führungskanal 61 zugeleitet.

Gemäß Figur 2 ist, wie dies vorstehend erwähnt wurde das Rotorteil 40 im Bereich eines Stützabschnitts 14 der Rotorwelle 11 gegenüber der Rotorwelle 11 abgestützt. Hier ist die Zuordnung so getroffen, dass der Stützabschnitt 14 und zumindest einer der Konturabschnitte 53.1 bis 53.3 des Gegen-Lagerteils 50 in Richtung der Rotationsachse R sich zumindest bereichsweise überdecken. Die Überdeckung liegt vorzugsweise im Bereich der Konturabschnitte 17.3 bzw. 44.3 vor.

## Patentansprüche

1. Abgasturbolader mit einem hydrodynamischen Gleitlager oder Lageranordnung mit einem hydrodynamischen Gleitlager, mit einem Rotor (10), einem dem Rotor (10) zugeordneten Gegen-Lagerteil (50) und einem Lagergehäuse (60) oder einem Gehäuseteil,

   wobei sich eine Rotor-Lagerfläche (17.1, 17.2, 17.3) des Rotors (10) und eine Gegenfläche des Gegen-Lagerteils (50) gegenüberstehen, um ein hydrodynamisches Gleitlager zu bilden,
   wobei die Rotor-Lagerfläche und/oder die Gegenfläche bei einem Schnitt längs und durch die Rotationsachse (R) in Schnittansicht eine durchgehende Lagerkontur bildet/bilden, die wenigstens zwei ineinander übergehende Konturabschnitte (44.1 bis 44.3; 53.1 bis 53.3) bilden, um hydrodynamische Tragfähigkeiten sowohl in radialer als auch in axialer Richtung zu erzeugen,
   und wobei das Gegen-Lagerteil (50) in das Lagergehäuse (60) oder das Gehäuseteil eingebaut ist,
   **dadurch gekennzeichnet,**
   **dass** zwischen einer Außenkontur des Gegen-Lagerteils (50) und dem Lagergehäuse (60) oder dem Gehäuseteil ein, umlaufender Spaltbereich (57) zur Bildung eines Quetschölfilms gebildet ist, wobei der Spaltbereich (57) mit einem Schmiermittel-Führungskanal (61) in räumlicher Verbindung steht, und dass sich der Spaltbereich (57) und die durchgehende Lagerkontur des Rotors (10) und/oder des Gegen Lagerteils (50) in Richtung der Rotationsachse (R) zumindest bereichsweise überdecken,
   **dass** die axiale Überdeckung in Richtung der Rotationsachse (R) zwischen dem Gegen-Lagerteil (50) und dem Lagergehäuse (60) oder dem Gehäuseteil im Spaltbereich (57) zur Bildung eines Quetschölfilms derart bemessen ist, dass das Verhältnis einer Erstreckung des Spaltbereiches (57) in Richtung der Rotationsachse zu einem radialen Spiel zwischen dem Gegen-Lagerteil (50) und dem Lagergehäuse (60) oder dem Gehäuseteil beträgt:

Axiale Erstreckung des Spaltbereiches (57) / Radialspiel = 40 bis 80.

2. Abgasturbolader oder Lageranordnung nach Anspruch 1,
   **dadurch gekennzeichnet, dass** das radiale Spiel zwischen dem Gegen-Lagerteil (50) und dem Lagergehäuse (60) oder dem Gehäuseteil größer ist als das radiale Spiel zwischen dem Rotorteil (40), beziehungsweise der Rotor-Lagerfläche (17.1, 17.2, 17.3) des Rotors, und dem Gegen-Lagerteil (50).

3. Abgasturbolader oder Lageranordnung nach Anspruch 1 oder 2,
   **dadurch gekennzeichnet, dass** zwischen dem Gegen-Lagerteil (50) und dem Lagergehäuse (60) oder dem Gehäuseteil im Spaltbereich (57) ein in radialer Richtung verlaufendes, auf den äußeren Durchmesser des Spaltbereichs (57) bezogenes relatives Spiel im Bereich zwischen 5 bis 10 Promille , besonders bevorzugt im Bereich zwischen 7 bis 9 Promille, gebildet ist oder dass das radiale Spiel zwischen dem Gegen-Lagerteil (50) und dem Lagergehäuse (60) oder dem Gehäuseteil 3 mal bis 5 mal größer ist als das radiale Spiel zwischen dem Rotorteil (40) bzw. der Rotor-Lagerfläche (17.1, 17.2, 17.3) des Rotors (10) und dem Gegen-Lagerteil (50).

4. Abgasturbolader oder Lageranordnungnach einem der Ansprüche 1 bis 3, **dadurch gekennzeichnet, dass** das Verhältnis der Erstreckung des Spaltbereiches (57) in Richtung der Rotationsachse zu dem Radialspiel zwischen dem Gegen-Lagerteil (50) und dem Lagergehäuse (60) oder dem Gehäuseteil beträgt:

$$\text{Axiale Erstreckung des Spaltbereiches (57) / Radialspiel} = 45 \text{ bis } 70,$$

5. Abgasturbolader oder Lageranordnungnach einem der Ansprüche 1 bis 4, **dadurch gekennzeichnet,**

   **dass** das Rotorteil (40) im Bereich eines Stützabschnitts (14) der Rotorwelle (11) gegenüber der Rotorwelle (11) abgestützt ist,
   und **dass** sich vorzugsweise der Stützabschnitt (14) und zumindest einer der Konturabschnitte (53.1 bis 53.3) des Gegen-Lagerteils (50) in Richtung der Rotationsachse (R) zumindest bereichsweise überdecken.

6. Abgasturbolader oder Lageranordnung nach Anspruch 5, **dadurch gekennzeichnet,**
   **dass** das Rotorteil (40) einen Lagerbereich (46) aufweist, der die Konturabschnitte (44.1 bis 44.3) bildet, und dass der Lagerbereich (46) so angeordnet ist, dass wenigstens einer dieser Konturabschnitte (44.1 bis 44.3) in Richtung der Rotationsachse (R) den Stützabschnitt (14) zumindest bereichsweise überdeckt.

7. Abgasturbolader oder Lageranordnungnach einem der Ansprüche 1 bis 6, **dadurch gekennzeichnet, dass** das radiale Spiel zwischen dem Stützabschnitt (14) der Rotorwelle (11) und dem am Stützabschnitt (14) anliegenden Bereich des Rotorteils (40) kleiner ist, als das radiale Spiel zwischen dem Rotorteil (40) und dem Gegen-Lagerteil (50).

8. Abgasturbolader oder Lageranordnungnach einem der Ansprüche 1 bis 7, **dadurch gekennzeichnet, dass** zwischen dem Stützabschnitt (14) der Rotorwelle (11) und dem am Stützabschnitt (14) anliegenden Bereich des Rotorteils (40) ein Passsitzes in Form einer Übergangspassung gebildet ist, und dass das auf den Durchmesser des Stützabschnitts (14) bezogene relative radiale Lagerspiel des hydrodynamischen Gleitlagers im Bereich zwischen -6 bis +6 Promille beträgt.

9. Abgasturbolader oder Lageranordnungnach einem der Ansprüche 1 bis 8, **dadurch gekennzeichnet, dass** das radiale Spiel zwischen dem Gegen-Lagerteil (50) und dem Lagergehäuse (60) oder dem Gehäuseteil und die axiale Erstreckung des Spaltbereichs (57) definiert durch die Beziehung:
   Axiale Erstreckung des Spaltbereichs (57) in Millimeter gleich 9 minus C mal radiales Spiel zwischen dem Gegen-Lagerteil (50) und dem Lagergehäuse (60) in Millimetern, wobei C im Bereich 61 bis 75 liegt, besonders bevorzugt im Bereich zwischen 66 bis 70 liegt.

10. Abgasturbolader oder Lageranordnungnach einem der Ansprüche 5 bis 9, **dadurch gekennzeichnet, dass** sich der Spaltbereich (57) und der Stützabschnitt (14) in Richtung der Rotationsachse (R) zumindest bereichsweise überdecken.

11. Abgasturbolader oder Lageranordnungnach einem der Ansprüche 1 bis 10, **dadurch gekennzeichnet, dass** das Rotorteil (40) ein Basisteil (41) aufweist, das mit zumindest einer Dichtungsaufnahme (42) versehen ist, in die ein Dichtelement (43) eingelegt ist.

12. Abgasturbolader oder Lageranordnungnach einem der Ansprüche 1 bis 11, **dadurch gekennzeichnet, dass** das Rotorteil (40) einen Ansatz (45) mit einer Anschlagfläche aufweist, und dass die Anschlagfläche an einer radial verlaufenden Fläche eines Bunds (12) der Rotorwelle (11) flächig anschlägt.

13. Abgasturbolader oder Lageranordnungnach Anspruch 12,
   **dadurch gekennzeichnet,**
   **dass** das Rotorteil (40) zwischen einem Verdichterrad (30) und dem Bund (12) vorzugsweise unter Einwirkung einer Schraubverbindung, verspannt ist, sodass es axial und in Umfangsrichtung unverdrehbar gesichert ist.

14. Abgasturbolader oder Lageranordnungnach einem der Ansprüche 1 bis 13, **dadurch gekennzeichnet, dass** die durchgehende und aus den Konturabschnitten (44.1 bis 44.3; 53.1 bis 53.3) gebildete Lagerkontur der Rotor-Lagerfläche und/oder der Gegenfläche bei einem Schnitt längs und durch die Rotationsachse (R) in Schnittansicht mindestens einmal stetig differenzierbar ausgebildet ist.

15. Abgasturbolader oder Lageranordnungnach einem der Ansprüche 5 bis 14, **dadurch gekennzeichnet, dass** zwischen der Rotorwelle (11) und dem Rotorteil (40) in Richtung der Rotationsachse (R) mittelbar oder unmittelbar neben dem Stützabschnitt (14) ein Abstandsraum gebildet ist, der vorzugsweise von einer Durchmesservergrößerung im Rotorteil (40) gebildet ist, die sich an den Lagerbereich (46) des Rotorteils (40) anschließt.

16. Abgasturbolader oder Lageranordnungnach Anspruch 15, **dadurch gekennzeichnet, dass** der Abstandsraum ringförmig gebildet ist.


**Claims**

1. Exhaust gas turbocharger with a hydrodynamic plain bearing or bearing arrangement with a hydrodynamic plain bearing, comprising a rotor (10), a counter-bearing part (50) associated with the rotor (10) and a bearing housing (60) or a housing part,

   wherein a rotor bearing surface (17.1, 17.2, 17.3) of the rotor (10) and a counter-surface of the counter-bearing part (50) oppose each other to form a hydrodynamic plain bearing,
   wherein the rotor bearing part (50) and/or the counter-bearing part (50), when cut along and through the axis of rotation (R) in sectional view, form(s) a continuous bearing contour forming at least two merging contour sections (44.1 to 44.3; 53.1 to 53.3) to provide hydrodynamic load carrying capabilities in both radial and axial directions,
   and wherein the counter-bearing part (50) is mounted in the bearing housing (60) or the housing member,
   **characterized in**
   **that** between an outer contour of the counter-bearing part (50) and the bearing housing (60) or the housing part a circumferential gap region (57) is formed for forming a squeezing oil film, the gap region (57) being in spatial connection with a lubricant guide channel (61), and that the gap region (57) and the continuous bearing contour of the rotor (10) and/or of the counter-bearing part (50) overlap at least in regions in the direction of the axis of rotation (R),
   in that the axial overlap in the direction of the axis of rotation (R) between the counter-bearing part (50) and the bearing housing (60) or the housing part in the gap region (57) for forming a squeezing oil film is dimensioned such that the ratio of an extension of the gap region (57) in the direction of the axis of rotation to a radial clearance between the counter-bearing part (50) and the bearing housing (60) or the housing part is:

$$\text{Axial extension of the gap area (57) / radial clearance} = 40 \text{ to } 80.$$

2. Exhaust gas turbocharger or bearing arrangement according to claim 1, **characterized in that** the radial clearance between the counter-bearing part (50) and the bearing housing (60) or the housing part is greater than the radial clearance between the rotor part (40), or the rotor bearing surface (17.1, 17.2, 17.3) of the rotor, and the counter-bearing part (50).

3. Exhaust gas turbocharger or bearing arrangement according to claim 1 or 2, **characterized in that** between the counter-bearing part (50) and the bearing housing (60) or the housing part in the gap region (57) there is formed a relative clearance extending in the radial direction and related to the outer diameter of the gap region (57) in the range between 5 to 10 per mil, particularly preferably in the range between 7 to 9 per mil, or **in that** the radial clearance between the counter-bearing part (50) and the bearing housing (60) or the housing part is 3 times to 5 times greater than the radial clearance between the rotor part (40) or the rotor bearing surface (17.1, 17.2, 17.3) of the rotor (10) and the counter-bearing part (50).

4. Exhaust gas turbocharger or bearing arrangement according to any of claims 1 to 3, **characterized in that** the ratio of the extension of the gap region (57) in the direction of the axis of rotation to the radial clearance between the counter-bearing part (50) and the bearing housing (60) or the housing part is:

## Axial extension of the gap area (57) / radial clearance = 45 to 70,

5. Exhaust gas turbocharger or bearing arrangement according to one of the claims 1 to 4, **characterized,**

   **in that** the rotor part (40) is supported in the region of a support section (14) of the rotor shaft (11) relative to the rotor shaft (11),
   and **in that** preferably the support section (14) and at least one of the contour sections (53.1 to 53.3) of the counter-bearing part (50) overlap in the direction of the axis of rotation (R) at least in regions.

6. Exhaust gas turbocharger or bearing arrangement according to claim 5, **characterized,**
   **in that** the rotor part (40) has a bearing region (46) which forms the contour sections (44.1 to 44.3), and in that the bearing region (46) is arranged in such a way that at least one of these contour sections (44.1 to 44.3) covers the support section (14) at least in regions in the direction of the axis of rotation (R).

7. Exhaust gas turbocharger or bearing arrangement according to any one of claims 1 to 6,
   **characterized in that** the radial clearance between the support section (14) of the rotor shaft (11) and the area of the rotor part (40) abutting the support section (14) is smaller than the radial clearance between the rotor part (40) and the counter-bearing part (50).

8. Exhaust gas turbocharger or bearing arrangement according to any one of claims 1 to 7,
   **characterized in that** a snug fit in the form of a transition fit is formed between the support section (14) of the rotor shaft (11) and the region of the rotor part (40) abutting the support section (14), and **in that** the relative radial bearing clearance of the hydrodynamic plain bearing based on the diameter of the support section (14) is in the range between -6 to +6 per mil.

9. Exhaust gas turbocharger or bearing arrangement according to any one of claims 1 to 8,

   **characterized in that** the radial clearance between the counter-bearing part (50) and the bearing housing (60) or the housing part and the axial extension of the gap area (57) is defined by the relation:
   Axial extension of the gap area (57) in millimeters equal to 9 minus C times radial clearance between the counter-bearing part (50) and the bearing housing (60) in millimeters, where C is in the range 61 to 75, particularly preferably in the range between 66 to 70.

10. Exhaust gas turbocharger or bearing arrangement according to any one of claims 5 to 9,
    **characterized in that** the gap region (57) and the support section (14) overlap at least in regions in the direction of the axis of rotation (R).

11. Exhaust gas turbocharger or bearing arrangement according to one of claims 1 to 10,
    **characterized in that** the rotor part (40) has a base part (41) which is provided with at least one seal receptacle (42) into which a sealing element (43) is inserted.

12. Exhaust gas turbocharger or bearing arrangement according to any one of claims 1 to 11,
    **characterized in that** the rotor part (40) has a projection (45) with an abutment surface, and **in that** the abutment surface abuts in a planar manner against a radially extending surface of a collar (12) of the rotor shaft (11).

13. Exhaust gas turbocharger or bearing arrangement according to claim 12, **characterized in**
    **in that** the rotor part (40) is clamped between a compressor wheel (30) and the collar (12), preferably under the action of a screw connection, so that it is secured axially and non-rotatably in the circumferential direction.

14. Exhaust gas turbocharger or bearing arrangement according to one of claims 1 to 13,
    **characterized in that** the continuous bearing contour of the rotor bearing surface and/or the counter-surface formed from the contour sections (44.1 to 44.3; 53.1 to 53.3) is continuously differentiable at least once in a sectional view along and through the axis of rotation (R).

15. Exhaust gas turbocharger or bearing arrangement according to one of claims 5 to 14,
    **characterized in that** a clearance space is formed between the rotor shaft (11) and the rotor part (40) in the direction of the axis of rotation (R) indirectly or directly adjacent to the support section (14), which clearance space is preferably formed by an increase in diameter in the rotor part (40) which adjoins the bearing area (46) of the rotor part (40).

16. Exhaust gas turbocharger or bearing arrangement according to claim 15, **characterized in that** the clearance space is formed annularly.

**Revendications**

1. Turbocompresseur à gaz d'échappement avec un palier lisse hydrodynamique ou agencement de palier avec un palier lisse hydrodynamique, avec un rotor (10), une partie de palier opposée (50) associée au rotor (10) et un boîtier de palier (60) ou une partie de boîtier,

   une surface de palier de rotor (17.1, 17.2, 17.3) du rotor (10) et une surface opposée de la partie de palier opposée (50) se faisant face pour former un palier lisse hydrodynamique,
   la surface de palier du rotor et/ou la contre-surface formant, dans une coupe le long et à travers l'axe de rotation (R), en vue en coupe, un contour de palier continu qui forme au moins deux parties de contour (44.1 à 44.3 ; 53.1 à 53.3) qui se fondent l'une dans l'autre, afin de générer des capacités de charge hydrodynamiques à la fois dans la direction radiale et dans la direction axiale,
   et dans lequel la partie de palier opposée (50) est montée dans le logement de palier (60) ou la partie de logement,
   **caractérisé en ce que**
   en ce qu'entre un contour extérieur de la partie de palier opposée(50) et le boîtier de palier (60) ou la partie de boîtier est formée une zone de fente (57) périphérique pour former un film d'huile d'écrasement, la zone de fente (57) étant en liaison spatiale avec un canal de guidage de lubrifiant (61), et **en ce que** la zone de fente (57) et le contour de palier continu du rotor (10) et/ou de la partie de palier opposée (50) se recouvrent au moins par zones dans la direction de l'axe de rotation (R),
   **en ce que** le recouvrement axial dans la direction de l'axe de rotation (R) entre la partie de palier opposée (50) et le boîtier de palier (60) ou la partie de boîtier dans la zone de fente (57) est dimensionné pour former un film d'huile d'écrasement de telle sorte que le rapport entre une extension de la zone de fente (57) dans la direction de l'axe de rotation et un jeu radial entre la partie de palier opposée (50) et le boîtier de palier (60) ou la partie de boîtier est égal à :

   Extension axiale de la zone de fente (57) / jeu radial = 40 à 80.

2. Turbocompresseur à gaz d'échappement ou ensemble de palier selon la revendication 1,
   **caractérisé en ce que** le jeu radial entre la partie de palier opposée (50) et le logement de palier (60) ou la partie de boîtier est supérieur au jeu radial entre la partie de rotor (40), ou la surface de palier de rotor (17.1, 17.2, 17.3) du rotor, et la partie de palier opposée (50).

3. Turbocompresseur à gaz d'échappement ou dispositif de palier selon la revendication 1 ou 2,
   **caractérisé en ce qu'**un jeu relatif s'étendant dans la direction radiale et se rapportant au diamètre extérieur de la zone de fente (57) est formé entre la partie de palier opposée (50) et le logement de palier (60) ou la partie de logement dans la zone de fente (57) dans une plage comprise entre 5 et 10 pour mille, de préférence dans une plage comprise entre 7 et 9 pour mille, ou **en ce que** le jeu radial entre la partie de palier opposée (50) et le logement de palier (60) ou la partie de logement est 3 fois à 5 fois plus grand que le jeu radial entre la partie de rotor (40) ou la partie de logement (60). la surface d'appui du rotor (17.1, 17.2, 17.3) du rotor (10) et la partie d'appui opposée (50).

4. Turbocompresseur ou dispositif de palier selon l'une des revendications 1 à 3, **caractérisé en ce que** le rapport entre l'extension de la zone de fente (57) dans la direction de l'axe de rotation et le jeu radial entre la partie de palier opposée (50) et le logement de palier (60) ou la partie de logement est de :

   Extension axiale de la zone de fente (57) / jeu radial = 45 à 70,

5. Turbocompresseur à gaz d'échappement ou ensemble de palier selon l'une des revendications 1 à 4, **caractérisé,**

   **en ce que** la partie de rotor (40) est soutenue par rapport à l'arbre de rotor (11) dans la zone d'une section de soutien (14) de l'arbre de rotor (11),

et **en ce que**, de préférence, la section d'appui (14) et au moins l'une des sections de contour (53.1 à 53.3) de la partie de palier opposée (50) se recouvrent au moins par zones dans la direction de l'axe de rotation (R).

6. Turbocompresseur ou ensemble de palier selon la revendication 5, **caractérisé en ce que**
**en ce que** la partie de rotor (40) présente une zone de palier (46) qui forme les sections de contour (44.1 à 44.3), et **en ce que** la zone de palier (46) est disposée de telle sorte qu'au moins une de ces sections de contour (44.1 à 44.3) recouvre au moins par zones la section d'appui (14) dans la direction de l'axe de rotation (R).

7. Turbocompresseur ou ensemble de palier selon l'une quelconque des revendications 1 à 6,
**caractérisé en ce que** le jeu radial entre la section de support (14) de l'arbre de rotor (11) et la zone de la partie de rotor (40) adjacente à la section de support (14) est inférieur au jeu radial entre la partie de rotor (40) et la partie de palier opposée (50).

8. Turbocompresseur ou ensemble de paliers selon l'une quelconque des revendications 1 à 7,
**caractérisé en ce qu'**entre la section d'appui (14) de l'arbre de rotor (11) et la zone de la partie de rotor (40) adjacente à la section d'appui (14) est formé un ajustement ajusté sous la forme d'un ajustement de transition, et **en ce que** le jeu radial relatif du palier lisse hydrodynamique, rapporté au diamètre de la section d'appui (14), est compris entre -6 et +6 pour mille.

9. Turbocompresseur ou ensemble de paliers selon l'une quelconque des revendications 1 à 8,
**caractérisé en ce que** le jeu radial entre la partie de palier conjuguée (50) et le logement de palier (60) ou la partie de logement et l'extension axiale de la zone d'entrefer (57) sont définis par la relation :
Extension axiale de la zone de fente (57) en millimètres égale à 9 moins C fois le jeu radial entre la partie de palier opposée (50) et le boîtier de palier (60) en millimètres, C se situant dans la plage de 61 à 75, de manière particulièrement préférée dans la plage de 66 à 70.

10. Turbocompresseur ou ensemble de palier selon l'une quelconque des revendications 5 à 9,
**caractérisé en ce que** la zone de fente (57) et la section de support (14) se recouvrent au moins par zones dans la direction de l'axe de rotation (R).

11. Turbocompresseur ou ensemble de palier selon l'une quelconque des revendications 1 à 10,
**caractérisé en ce que** la partie rotor (40) présente une partie de base (41) qui est pourvue d'au moins un logement de joint (42) dans lequel est inséré un élément d'étanchéité (43).

12. Turbocompresseur ou ensemble de palier selon l'une quelconque des revendications 1 à 11,
**caractérisé en ce que** la partie de rotor (40) présente un appendice (45) avec une surface de butée, et **en ce que** la surface de butée vient en butée à plat contre une surface s'étendant radialement d'un épaulement (12) de l'arbre de rotor (11).

13. Turbocompresseur ou dispositif de palier selon la revendication 12,
**caractérisé en ce que**
**en ce que** la partie de rotor (40) est serrée entre une roue de compresseur (30) et le collet (12), de préférence sous l'effet d'une liaison par vis, de sorte qu'elle est bloquée axialement et dans la direction périphérique sans pouvoir tourner.

14. Turbocompresseur ou ensemble de palier selon l'une quelconque des revendications 1 à 13,
**caractérisé en ce que** le contour de palier continu et formé par les sections de contour (44.1 à 44.3 ; 53.1 à 53.3) de la surface de palier du rotor et/ou de la contre-surface est réalisé de manière à pouvoir être différencié de manière continue au moins une fois en vue en coupe dans le sens de la longueur et à travers l'axe de rotation (R).

15. Turbocompresseur ou dispositif de palier selon l'une des revendications 5 à 14, **caractérisé en ce qu'**un espace d'écartement est formé entre l'arbre de rotor (11) et la partie de rotor (40) dans la direction de l'axe de rotation (R), directement ou indirectement à côté de la section d'appui (14), espace d'écartement qui est formé de préférence par un agrandissement de diamètre dans la partie de rotor (40), qui se raccorde à la zone de palier (46) de la partie de rotor (40).

16. Turbocompresseur ou dispositif de palier selon la revendication 15, **caractérisé en ce que** l'espace d'écartement est de forme annulaire.

70

72
65
64
57
62
18

10

60
61
71
57
62

40

30

31

19

16

15

40

14

12

17

20

63

52

11

50

R

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016146189 A1
- EP 1972759 B1
- DE 102008059598 A1
- WO 2014105377 A1
- DE 202016105071 U1

**In der Beschreibung aufgeführte Nicht-Patentliteratur**

- Taschenbuch. Beuth Verlag GmbH, 1991, vol. 198